# EUROPÄISCHE PATENTSCHRIFT

(11) **EP 2 373 386 B1**
(45) Veröffentlichungstag und Bekanntmachung des Hinweises auf die Patenterteilung: **14.08.2013**
(21) Anmeldenummer: 09804257.5
(22) Anmeldetag: 29.12.2009
(51) Int. Cl.: A63B 55/00, A63B 55/08

(54) **GOLFTASCHE UND TROLLEY ZUR AUFNAHME UND ZUM TRANSPORT EINER GOLFTASCHE**
GOLF BAG AND TROLLEY FOR RECEIVING AND TRANSPORTING A GOLF BAG
SAC DE GOLF ET CHARIOT DESTINÉ À RECEVOIR ET TRANSPORTER UN SAC DE GOLF

(30) Priorität: 06.01.2009 DE 102009004140
(43) Veröffentlichungstag der Anmeldung: 12.10.2011
(73) Patentinhaber: Boxbag GmbH, 82096 Hohenschäftlarn (DE)
(72) Erfinder: NIEDERMEIER, Christian, 82544 Egling (DE); SENGERLING, Manfred, 36100 Petersberg (DE); PLONNER, Wolfgang, 80935 München (DE)
(74) Vertreter: Hofmeister, Frank
(86) Internationale Anmeldenummer: PCT/EP2009/009294
(87) Internationale Veröffentlichungsnummer: WO 2010/078951

(56) Entgegenhaltungen:
- WO-A2-2007/005062
- FR-A1- 2 436 705
- US-A- 3 901 299
- US-A1- 2007 123 363
- US-A1- 2008 047 639

## Beschreibung

Die Erfindung betrifft eine Golftasche mit einem mindestens ein Aufnahmefach für Golfschläger aufweisenden Grundkörper, wobei der Grundkörper mindestens eine magnetische Haltevorrichtung aufweist. Weiterhin betrifft die Erfindung einen Trolley zur Aufnahme und zum Transport der Golftasche.

Golftaschen zum Transport der Golfschläger sind aus der Praxis in verschiedenen Ausführungsformen bekannt. In erster Linie dienen diese Golftaschen während des Golfspiels dazu, dem Golfspieler die Golfschläger und auch Golfbälle bereitzuhalten. Zum Transport der recht schweren Golftaschen dienen sogenannte Trolleys, auf denen die Golftaschen mittels Riemen oder Gummizügen und dergleichen Laschen festlegbar sind.

Eine gattungsgemäße Golftasche ist beispielsweise aus der WO-A-2007/005062 und aus der US 2006/0011682 A1 bekannt. Diese Art der Festlegung der Golftaschen auf den Trolleys hat sich in der Praxis durchaus bewährt, jedoch kommt es immer wieder vor, dass sich die mit den Golfschlägern befüllte Golftasche beim Ziehen des Trolleys über den unebenen Golfplatz auf dem Trolley um seine Längsachse dreht, so dass der Spieler die Golftasche anheben und wieder richtig auf dem Trolley platzieren muss, wenn der sichere Halt der Golftasche auf dem Trolley bei einem gleichbleibend guten Zugriff auf die in der Golftasche gelagerten Golfschläger gewährleistet bleiben soll.

Davon ausgehend liegt der Erfindung die Aufgabe zugrunde, eine Golftasche so auszugestalten, dass diese einfach und lagestabil an einem Trolley festlegbar ist.

Diese Aufgabe wird durch den Gegenstand des Anspruchs 1 gelöst.

Diese Art der Festlegung der Golftasche am Trolley ist nicht nur besonders einfach, da es keiner Schnüren oder Gummizüge bedarf, sie bietet darüber hinaus auch einen verrutschsichern und verdrehsicheren Halt der Golftasche auf dem Trolley.

Durch die erfindungsgemäße Anordnung mindestens einer magnetischen Haltevorrichtung am Grundkörper der Golftasche ist erstmalig möglich, einerseits die Golftasche selbst an einer korrespondierenden magnetischen Haltevorrichtung festzulegen und andererseits zusätzliche Bauteile an der Golftasche festzulegen.

Gemäß einer ersten Ausführungsform der Erfindung wird vorgeschlagen, dass die mindestens eine magnetische Haltevorrichtung aus jeweils mindestens einem Magneten besteht, der mit mindestens einer magnetischen Reaktionsfläche an einem anderen Bauteil in Wirkverbindung tritt.

Zur Ausbildung der mit dem mindestens einen Magneten in Wirkverbindung tretenden magnetischen Reaktionsfläche wird erfindungsgemäß vorgeschlagen, dass diese mindestens eine magnetische Reaktionsfläche als magnetische Fläche, wie beispielsweise eine Metallplatte, oder als Gegenmagnet zum Magneten der Golftasche ausgebildet ist.

Mit einer alternativen oder auch zusätzlichen Ausführungsform der Erfindung wird vorgeschlagen, dass die mindestens eine magnetische Haltevorrichtung aus mindestens einer magnetischen Fläche besteht, die mit mindestens einem Magneten an einem anderen Bauteil in Wirkverbindung tritt.

Diese magnetischen Haltevorrichtungen, Magnet und magnetische Fläche oder Gegenmagnet, sind einfach und bequem zu handhaben.

Vorteilhafterweise ist am Grundkörper, im Bereich des oberen Randes des Grundkörpers und am Fuß des Grundkörpers, jeweils mindestens ein Magnet angeordnet, der mit mindestens einer am Trolley angeordneten magnetischen Fläche in Wirkverbindung tritt. Diese Lagerung der Golftasche am Trolley über mindestens zwei räumlich weit voneinander beabstandete Lagerpunkte gewährt auch bei stärkeren Erschütterungen einen sicheren und dauerhaft verdrehsicheren Halt der Golftasche auf dem Trolley und gewährleistet somit einen gleichbleibend guten Zugriff auf die Golfschläger.

Gemäß einer praktischen Ausführungsform der Erfindung wird vorgeschlagen, dass über mindestens eine zusätzliche magnetische Haltevorrichtung mindestens eine Zusatztasche Grundkörper festlegbar ist, wobei an jeder Zusatztasche mindestens eine mit der magnetischen Haltevorrichtung des Grundkörpers in Wirkverbindung tretende korrespondierende magnetische Haltevorrichtung angeordnet ist. Durch die einfache magnetische Anbringung von Zusatztaschen am Grundkörper der Golftasche lassen sich das Fassungsvolumen und die Flexibilität der Golftasche für Zubehör deutlich erhöhen.

Vorteilhafterweise weist der Grundkörper der Golftasche eine magnetische Fläche zur Aufnahme mehrerer jeweils mit mindestens einem Magneten versehenen Zusatztaschen auf, so dass je nach Bedarf eine oder mehrere Zusatztaschen an der Golftasche angebracht werden können.

Zur Lagerung der einen Teil der magnetischen Haltevorrichtung bildenden Magneten wird mit der Erfindung vorgeschlagen, dass der mindestens eine Magnet in einer am Grundkörper der Golftasche angeordneten Aufnahme angeordnet ist. Vorteilhafterweise ist die Aufnahme, beispielsweise über Klettverschlüsse oder dergleichen, auswechselbar am Grundkörper der Golftasche festlegbar, so dass auch bestehende Golftaschen nachträglich mit der erfindungsgemäßen magnetischen Haltevorrichtung ausstattbar sind. Weiterhin wird mit der Erfindung vorgeschlagen, dass die Aufnahme vorteilhafterweise mit einer Antirutschbeschichtung versehen sind.

Zur Ausbildung der mit den Magneten in Wirkverbindung tretenden magnetischen Flächen wird gemäß einer praktischen Ausführungsform der Erfindung vorgeschlagen, dass die mindestens eine magnetische Fläche als am Grundkörper der Golftasche und/oder am Rahmen des Trolleys angeordnete Metallplatte ausgebildet ist.

Weiterhin betrifft die Erfindung einen Trolley zur Aufnahme und zum Transport einer Golftasche, wobei der Trolley einen mit einem Fahrwerk sowie mit mindestens einem Handgriff versehenen Rahmen aufweist.

Zur Lösung der eingangs genannten Aufgabe wird erfindungsgemäß bezüglich des Trolleys vorgeschlagen, dass am Rahmen des Trolleys mindestens eine magnetische Haltevorrichtung angeordnet ist, die mit mindestens einer an der aufzunehmenden und zu transportierenden Golftasche angeordneten magnetischen Haltevorrichtung in Wirkverbindung tritt.

Durch die erfindungsgemäße Anordnung mindestens einer magnetischen Haltevorrichtung am Rahmen des Trolleys ist erstmalig möglich, die Golftasche über eine korrespondierende magnetischen Haltevorrichtung am Grundkörper der Golftasche bei einfacher Handhabung verdrehsicher am Trolley festzulegen.

Schließlich wird mit der Erfindung vorgeschlagen, dass am Rahmen des Trolleys zwei magnetische Reaktionsflächen angeordnet sind, die mit jeweils mindestens einem an der Golftasche angeordneten Magneten in Wirkverbindung treten. Diese Lagerung an mindestens zwei räumlich weit voneinander beabstandeten Lagerpunkten der Golftasche am Trolley gewährt auch bei stärkeren Erschütterungen einen sicheren und dauerhaft verdrehsicheren Halt der Golftasche auf dem Trolley, so dass Golfspieler immer einen guten Zugriff auf seine Golfschläger hat.

Die am Rahmen des Trolleys vorgesehenen beiden magnetischen Reaktionsflächen sind erfindungsgemäß als magnetische Flächen, wie beispielsweise Metallflächen; oder als Gegenmagnete zu den Magneten der Golftasche ausgebildet ist.

Weitere Merkmale und Vorteile der Erfindung ergeben sich anhand der zugehörigen Zeichnung, in der zwei Ausführungsbeispiele einer erfindungsgemäßen Golftasche nur beispielhaft dargestellt sind, ohne die Erfindung auf diese Ausführungsbeispiele zu beschränken. In der Zeichnung zeigt:
- Fig. 1: eine perspektivische Ansicht einer ersten Ausführungsform einer erfindungsgemäßen Golftasche nebst erfindungsgemäßem Trolley;
- Fig. 2: eine perspektivische Ansicht einer zweiten Ausführungsform einer erfindungsgemäßen Golftasche nebst Zusatztaschen vor dem Festlegen der Zusatztaschen und
- Fig. 3: eine Ansicht gemäß Fig. 2, jedoch die Golftasche mit den daran festgelegten Zusatztaschen darstellend.

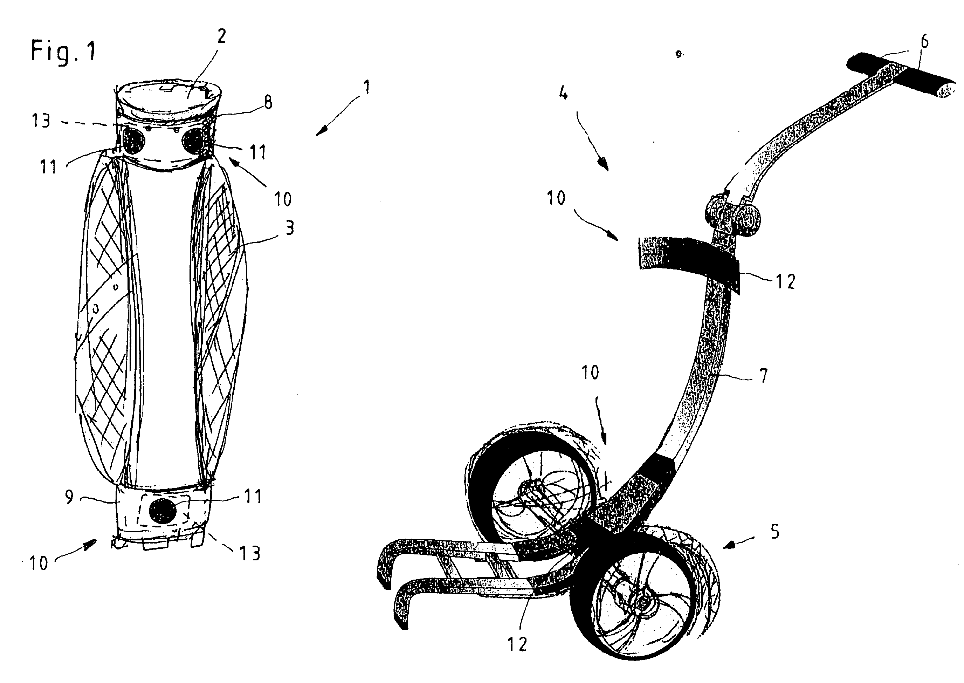

Fig. 1 zeigt zum einen eine Golftasche 1, die im Wesentlichen aus einem ein Aufnahmefach 2 für Golfschläger aufweisenden Grundkörper 3 besteht und zum anderen einen Trolley 4 zur Aufnahme und zum Transport der Golftasche 1, wobei der Trolley 4 im Wesentlichen aus einem mit einem Fahrwerk 5 und zwei Handgriffen 6 versehenen Rahmen 7 besteht. Für die nachfolgenden Ausführungen ist es unerheblich, ob es sich bei dem Trolley 4 um einen nicht angetriebenen Trolley 4, wie dargestellt, oder einen motorbetriebenen Trolley 4 handelt.

Wie weiterhin aus Fig. 1 ersichtlich, sind am oberen Rand 8 sowie am Fuß 9 des Grundkörpers 3 der Golftasche 1 magnetische Haltevorrichtungen 10 angeordnet, die bei der dargestellten Ausführungsform als Magnete 11 ausgebildet sind. Diese als Magnete 11 ausgebildeten magnetischen Haltevorrichtungen 10 dienen dazu, mit einer korrespondierenden magnetischen Haltevorrichtung 10 an einem anderen Bauteil in Wirkverbindung zu treten.

Bei der in Fig. 1 dargestellten ersten Ausführungsform handelt es sich bei diesem anderen Bauteil um den Trolley 4, der ebenfalls zwei magnetische Haltevorrichtungen 10 aufweist, die korrespondierend zu den Magneten 11 der Golftasche 1 als magnetische Flächen 12, beispielsweise Metallplatten, ausgebildet sind. Selbstverständlich ist es auch möglich, die mit den Magneten 11 der Golftasche 1 korrespondierenden magnetischen Haltevorrichtungen 10 auch als Gegenmagneten zu den Magneten 11 der Golftasche 1 auszubilden.

Zum Festlegen der Golftasche 1 auf dem Trolley 4 wird die Golftasche 1 so auf dem Trolley 4 platziert, dass die am Grundkörper 3 der Golftasche 1 angeordneten Magnete 11 zur haftenden Anlage an den magnetischen Flächen 12 des.Trolleys 4 gelangen. Die dargestellte Lagerung der Golftasche 1 am Trolley 4 über mindestens zwei räumlich weit voneinander beabstandete Lagerunkte gewährt auch bei stärkeren Erschütterungen einen sicheren und dauerhaft verdrehsicheren Halt der Golftasche 1 auf dem Trolley 4 bei gleichbleibend gutem Zugriff auf die Golfschläger dar. Darüber hinaus stellt diese magnetische Lagerung eine einfach zu handhabende Möglichkeit der Fixierung der Golftasche 1 am Trolley 4 dar.

Alternativ zu der in Fig. 1 dargestellten Ausführungsform ist es selbstverständlich auch möglich, die magnetischen Haltevorrichtungen 10 so auszubilden, dass die Magnete 11 am Rahmen 7 des Trolleys 4 und die magnetischen Flächen 12 oder Gegenmagneten am Grundkörper 3 der Golftasche 1 angeordnet sind. Ebenso ist es möglich, die Anzahl der verwendeten magnetischen Haltevorrichtungen 10 und/oder Magnete 11 je nach Bedarf zu variieren.

Um auch bestehende Golftaschen 1 nachträglich mit magnetischen Haltevorrichtungen 10 ausstatten zu können, sind die Magnete 11 bei der dargestellten Ausführungsform in gestrichelt dargestellten Aufnahmen 13 angeordnet, die beispielsweise mittels eines Klettverschlusses oder dergleichen, am Grundkörper 3 der Golftasche 1 festlegbar ist. Ebenso besteht natürlich auch die Möglichkeit, die mit den Magneten 11 korrespondierenden magnetischen Flächen 12 über die Aufnahmen 13 am Grundkörper 3 der Golftasche 1 anzuordnen. Der sichere Halt der miteinander zu verbindenden Bauteile kann dadurch erhöht werden, dass die Aufnahmen 13 mit einer Antirutschbeschichtung versehen werden.

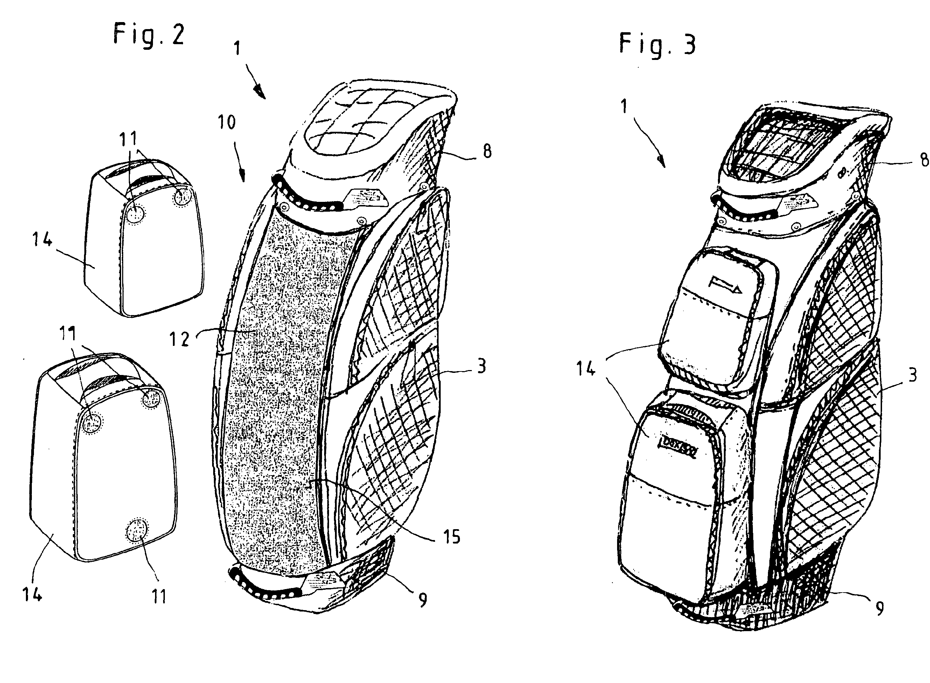

Fig. 2 zeigt eine zweite Ausführungsform zur Verwendung der am Grundkörper 3 der Golftasche 1 angeordneten magnetischen Haltevorrichtungen 10. Bei dieser Ausführungsform, die alternativ oder ergänzend zu der in Fig. 1 dargestellten Lagerung der Golftasche 1 auf dem Trolley 4 Verwendung finden kann, dienen die magnetischen Haltevorrichtungen 10 zum Festlegen von einer oder mehrerer Zusatztaschen 14 am Grundkörper 3 der Golftasche 1.

Wie weiterhin aus Fig. 2 ersichtlich, ist an der Vorderseite 15 des Grundkörpers 3 der Golftasche 1 eine magnetische Haltevorrichtungen 10 angeordnet, die bei der dargestellten Ausführungsform als durchgehende magnetische Fläche 12, beispielsweise Metallplatte, ausgebildet ist. Diese als magnetische Fläche 12 ausgebildete magnetischen Haltevorrichtungen 10 dient dazu, mit einer korrespondierenden magnetischen Haltevorrichtung 10 an den Zusatztaschen 14 in Wirkverbindung zu treten.

Bei der in Fig. 2 dargestellten zweiten Ausführungsform handelt es sich bei den an den Zusatztaschen 14 angeordneten magnetischen Haltevorrichtungen 10 um zu der magnetischen Fläche 12 der Golftasche 1 korrespondierende Magnete 11.

Alternativ zu der in Fig. 2 dargestellten Ausführungsform ist es selbstverständlich auch möglich, die magnetischen Haltevorrichtungen 10 so auszubilden, dass die Magnete 11 am Grundkörper 3 der Golftasche 1 und die magnetischen Flächen 12 an den Zusatztaschen 14 angeordnet sind. Ebenso ist es möglich, die Anzahl der verwendeten magnetischen Haltevorrichtungen 10 und/oder Magnete 11 je nach Bedarf zu variieren oder die magnetischen Haltevorrichtungen 10 als Magneten 11 am einen Bauteil 3 oder 14 und Gegenmagneten am anderen Bauteil 14 oder 3 auszubilden.

Fig. 3 zeigt eine mit zwei Zusatztaschen 14 versehene Golftasche 1 im fertig montierten Zustand. Diese solchermaßen ausgebildete und ausgestattete Golftasche 1 lässt sich über die zuvor beschriebenen magnetischen Haltevorrichtungen 10 am Trolley 4 gemäß Fig. 1 festlegen.

Ebenso wie die Zusatztaschen 14 über magnetische Haltevorrichtungen 10 am Grundkörper 3 der Golftasche 1 festlegbar sind, besteht weiterhin die Möglichkeit, beispielsweise auch Schlägerhauben über korrespondierende magnetische Haltevorrichtungen 10 an Grundkörper 3 der Golftasche 1 oder an einer Zusatztasche 14 festzulegen.

Auch wenn es sich bei der in Fig. 1 bis 3 dargestellten Golftasche 1 um eine auf einem Trolley 4 zu platzierende Golftasche 1 handelt, ist das dargestellte System der magnetischen Haltevorrichtungen 10 selbstverständlich auf alle Arten von Golftaschen 1, wie beispielsweise Schultertaschen oder dergleichen, anzuwenden.

Die Verwendung der magnetischen Haltevorrichtungen 10 stellt eine einfach zu handhabende Möglichkeit dar, den Nutzungsumfang und die Flexibilität einer Golftasche 1 zu erhöhen und die Golftasche sicher und lagestabil an einem Trolley 4 festzulegen.

### Bezugszeichenliste

- 1: Golftasche
- 2: Aufnahmefach
- 3: Grundkörper
- 4: Trolley
- 5: Fahrwerk
- 6: Handgriff
- 7: Rahmen
- 8: Rand
- 9: Fuß
- 10: magnetische Haltevorrichtung
- 11: Magnet
- 12: magnetische Fläche
- 13: Aufnahme
- 14: Zusatztasche
- 15: Vorderseite

## Patentansprüche

1. Golftasche mit einem mindestens ein Aufnahmefach (2) für Golfschläger aufweisenden Grundkörper (3), wobei der Grundkörper (3) mindestens eine magnetische Haltevorrichtung (10) aufweist,
**dadurch gekennzeichnet,**
**dass** am oberen Rand (8) sowie am Fuß (9) des Grundkörpers (3) mindestens jeweils eine magnetische Haltevorrichtung (10) angeordnet ist, über die der Grundkörper (3) an einem Trolley (4) festlegbar ist, wobei am Trolley (4) mit den magnetischen Haltevorrichtungen (10) des Grundkörpers (3) in Wirkverbindung tretende korrespondierende magnetische Reaktionsflächen angeordnet sind.

2. Golftasche nach Anspruch 1, **dadurch gekennzeichnet, dass** jede magnetische Haltevorrichtung (10) aus jeweils mindestens einem Magneten (11) besteht, der mit mindestens einer magnetischen Reaktionsfläche an einem anderen Bauteil (5, 14) in Wirkverbindung tritt.

3. Golftasche nach Anspruch 2, **dadurch gekennzeichnet, dass** jede magnetische Reaktionsfläche als magnetische Fläche (12) oder Gegenmagnet zum Magnet (11) ausgebildet ist.

4. Golftasche nach Anspruch 2 oder 3, **dadurch gekennzeichnet, dass** jede magnetische Haltevorrichtung (10) aus mindestens einer magnetischen Fläche (12) besteht, die mit mindestens einem Magneten (11) an einem anderen Bauteil (5, 14) in Wirkverbindung tritt.

5. Golftasche nach einem der Ansprüche 1 bis 4, **dadurch gekennzeichnet, dass** über mindestens eine zusätzliche magnetische Haltevorrichtung (10) mindestens eine Zusatztasche (14) am Grundkörper (3) festlegbar ist, wobei an jeder Zusatztasche (14) mindestens eine mit der magnetischen Haltevorrichtung (10) des Grundkörpers (3) in Wirkverbindung tretende korrespondierende magnetische Haltevorrichtung (10) angeordnet ist.

6. Golftasche nach Anspruch 5, **dadurch gekennzeichnet, dass** der Grundkörper (3) eine magnetische Fläche (12) zur Aufnahme mehrerer jeweils mit mindestens einem Magneten (11) versehenen Zusatztaschen (14) aufweist.

7. Golftasche nach einem der Ansprüche 2 bis 6, **dadurch gekennzeichnet, dass** der mindestens eine Magnet (11) in einer am Grundkörper (3) angeordneten Aufnahme (13) angeordnet ist.

8. Golftasche nach Anspruch 7, **dadurch gekennzeichnet, dass** die Aufnahme (13) mit einer Antirutschbeschichtung versehen ist.

9. Golftasche nach Anspruch 7 oder 8, **dadurch gekennzeichnet, dass** die Aufnahme (13) für den mindestens einen Magneten (11) auswechselbar am Grundkörper (3) festlegbar ist.

10. Golftasche nach einem der Ansprüche 6 bis 9, **dadurch gekennzeichnet, dass** die mindestens eine magnetische Fläche (12) als Metallplatte ausgebildet ist.

11. Trolley zur Aufnahme und zum Transport einer Golftasche (1) nach mindestens einem der Ansprüche 1 bis 10, mit einem Fahrwerk (5) sowie mit mindestens einem Handgriff (6) versehenen Rahmen (7),
**dadurch gekennzeichnet,**
**dass** am Rahmen (7) mindestens zwei räumlich weit voneinander beabstandete magnetische Haltevorrichtungen (10) angeordnete sind die mit jeweils einer an der Golftasche (1) angeordneten magnetischen Haltevorrichtung (10) in Wirkverbindung treten.

12. Trolley nach Anspruch 11, **dadurch gekennzeichnet, dass** die zwei magnetischen Reaktionsflächen als magnetische Flächen (12) oder Gegenmagnete zu den Magneten (11) der Golftasche (1) ausgebildet sind.

## Claims

1. Golf bag with a base body that comprises at least one insertion compartment for golf clubs, with said the base body comprising at least one magnetic holding device,
**characterized in that**
on the upper edge and on the foot of the base body at least one magnetic holding device is positioned in each case, by which the base body can be attached on a trolley, wherein corresponding magnetic reaction surfaces are positioned on the trolley which come into active connection with the magnetic holding devices of the base body.

2. Golf bag according to claim 1, **characterized in that** each magnetic holding device consists of at least one magnet that comes into active connection with at least one magnetic reaction surface on another component.

3. Golf bag according to claim 2, **characterized in that** each magnetic reaction surface is configured as a magnetic surface or a counter-magnet to the magnet.

4. Golf bag according to claim 2 or 3, **characterized in that** each magnetic holding device consists of at least one magnetic surface that comes into active connection with at least one magnet on another component.

5. Golf bag according to one of claims 1 through 4, **characterized in that** at least one additional pocket can be attached on the base body by at least one additional magnetic holding device, wherein at least one corresponding magnetic holding device is positioned on each additional pocket, which comes into active connection with the magnetic holding device of the base body.

6. Golf bag according to claim 5, **characterized in that** the base body comprises a magnetic surface for receiving several additional pockets that are each equipped with at least one magnet.

7. Golf bag according to one of claims 1 through 6, **characterized in that** the at least one magnet is positioned in an insertion device positioned on the base body.

8. Golf bag according to claim 7, **characterized in that** the insertion device is equipped with an anti-slip coating.

9. Golf bag according to claim 7 or 8, **characterized in that** the insertion device for that at least one magnet can be removably attached on the base body.

10. Golf bag according to one of claims 6 through 9, **characterized in that** the at least one magnetic surface is configured as a metal plate.

11. Trolley for receiving and transporting a golf bag according to at least one of claims 1 through 10, with a frame equipped with a chassis as well as at least one handle,
**characterized in that**,
at least two magnetic holding devices are positioned spatial far away from another on the frame which each are coming into active connection with a magnetic holding device positioned on the golf bag.

12. Trolley according to claim 11, **characterized in that** the two magnetic reaction surfaces are configured as magnetic surfaces or counter-magnets to the magnets of the golf bag.

## Revendications

1. Sac de golf comprenant un corps de base (3) présentant au moins un compartiment de réception (2) pour clubs de golf, le corps de base (3) présentant au moins un dispositif de maintien magnétique (10), **caractérisé en ce qu'**au niveau du bord supérieur (8) ainsi qu'au niveau du pied (9) du corps de base (3), est agencé respectivement au moins un dispositif de maintien magnétique (10), dispositifs par l'intermédiaire desquels le corps de base (3) peut être fixé à un chariot (4), et **en ce que** sur le chariot (4) sont agencées des surfaces de réaction magnétiques, qui sont en correspondance et entrent en interaction avec les dispositifs de maintien magnétiques (10) du corps de base (3).

2. Sac de golf selon la revendication 1, **caractérisé en ce que** chaque dispositif de maintien magnétique (10) est constitué respectivement d'au moins un aimant (11), qui entre en interaction avec au moins une surface de réaction magnétique sur une autre pièce (5, 14).

3. Sac de golf selon la revendication 2, **caractérisé en ce que** chaque surface de réaction magnétique est réalisée en tant que surface magnétique (12) ou d'aimant en opposition à l'aimant (11).

4. Sac de golf selon la revendication 2 ou la revendication 3, **caractérisé en ce que** chaque dispositif de maintien magnétique (10) est constitué d'au moins une surface magnétique (12), qui entre en interaction avec au moins un aimant (11) sur une autre pièce (5, 14).

5. Sac de golf selon l'une des revendications 1 à 4, **caractérisé en ce qu'**au moins une poche additionnelle (14) peut être fixée au corps de base (3), par l'intermédiaire d'au moins un dispositif de maintien magnétique (10) supplémentaire, et **en ce que** sur chaque poche additionnelle (14) est agencé au moins un dispositif de maintien magnétique (10) en correspondance et entrant en interaction avec le dispositif de maintien magnétique (10) du corps de base (3).

6. Sac de golf selon la revendication 5, **caractérisé en ce que** le corps de base (3) présente une surface magnétique (12) destinée à recevoir plusieurs poches additionnelles (14) munies chacune d'au moins un aimant (11).

7. Sac de golf selon l'une des revendications 2 à 6, **caractérisé en ce que** ledit au moins un aimant (11) est placé dans un logement de réception (13) agencé sur le corps de base (3).

8. Sac de golf selon la revendication 7, **caractérisé en ce que** le logement de réception (13) est muni d'un revêtement antiglisse.

9. Sac de golf selon la revendication 7 ou la revendication 8, **caractérisé en ce que** le logement de réception (13) pour ledit au moins un aimant (11) peut être fixé de manière interchangeable sur le corps de base (3).

10. Sac de golf selon l'une des revendications 6 à 9, **caractérisé en ce que** ladite au moins une surface magnétique (12) est réalisée sous la forme d'une plaque métallique.

11. Chariot destiné à recevoir et à transporter un sac de golf (1) selon l'une au moins des revendications 1 à 10, et comprenant un train de roulement (5) ainsi qu'un châssis (7) pourvu d'au moins une poignée (6), **caractérisé en ce que** sur le châssis (7) sont agencés au moins deux dispositifs de maintien magnétiques (10), qui présentent une distance d'espacement spatial réciproque importante, et entrent respectivement en interaction avec un dispositif de maintien magnétique (10) agencé sur le sac de golf (1).

12. Chariot selon la revendication 11, **caractérisé en ce que** les deux surfaces de réaction magnétiques sont réalisées sous la forme de surfaces magnétiques (12) ou d'aimants en opposition aux aimants (11) du sac de golf (1).
